# EUROPEAN PATENT APPLICATION

(11) **EP 1 167 816 A1**
(43) Date of publication of application: **02.01.2002**
(21) Application number: 01115967.0
(22) Date of filing: 29.06.2001
(51) Int. Cl.: F16G 13/06

(54) **Low noise roller chain**

(30) Priority: 30.06.2000 JP 2000198404
(71) Applicant: Daido Kogyo Co., Ltd., Ishikawa Pref. (JP)
(72) Inventor: Kurokawa, Yoshio c/o Daido Kogyo Co.Ltd., Ishikawa Pref. (JP); Sugita, Haruomi c/o K.K. Honda Gijutsu Kenk., Saitama (JP); Sekita, Masahiko c/oK.K.Honda Gijutsu Kenk., Saitama (JP); Noro, Hirofumi c/o K.K.Honda Gijutsu Kenk., Saitama (JP); Mukai, Yasuaki c/oK.K.Honda Gijutsu Kenk., Saitama (JP); Segami, Hideaki c/oK.K. Honda Gijutsu Kenk., Saitama (JP)
(74) Representative: Prechtel, Jörg, Dipl.-Phys. Dr.

(57) **Abstract**

A low noise roller chain (1) includes a rigid roller (17) made of metal and an elastic roller (18) made of elastic material that are arranged end to end and fitted on a bushing (13) between two opposed inner plates (14) so as to jointly form a roller assembly (19). The width (W) of the elastic roller is 13 to 45% of the overall width (W+w) of the roller assembly (19), and the thickness of the elastic roller (18) is larger [by 5 to 25%] than the thickness of the rigid roller (17) by 5 to 25% of the thickness of the elastic roller (18). With the elastic roller (18) thus constructed, noise generated upon abutment of the roller chain with a sprocket can be effectively suppressed without deteriorating the durability of the rigid metal roller (17). The elastic roller may be arranged in a zigzag pattern in the longitudinal direction of the roller chain.

## Description

The present invention relates generally to roller chains for use in motorcycles as a power transmission drive, and more particularly to such a low noise roller chain, which is capable of reducing noises, generated when the chain engages a sprocket.

A roller chain is stretched between two sprockets provided at a predetermined distance from each other so that power from one sprocket (driving sprocket) is transmitted to the other sprocket (driven sprocket) by means of the roller chain. The roller chain generally comprises pin links and roller links articulately connected together in an endless fashion. As the sprockets rotate, each roller of the roller chain first comes in contact with one tooth of a sprocket, then is in meshing with the same sprocket tooth and finally leaves from meshing engagement with the same sprocket tooth. At a mesh with the sprocket tooth, the roller collides with the sprocket tooth, resulting in generation of an impact noise. Subsequent to the meshing engagement between the roller chain and the sprocket, a noise resulting from vibration may be also generated. In the case of a motorcycle, since the roller chain is exposed exteriorly and driven at high speeds, noises can spread in circumference.

It will be understood that suppressing the collision when the roller chain engages the sprocket can attain a noise prevention effect. Japanese Patent Laid-open Publication No. HEI-7-83290 shows a roller chain having a metallic roller and an annular cushion member fitted in pair on a bushing. The cushion member has an outside diameter slightly larger than that of the metallic roller so that the cushion member comes in contact with a sprocket tooth in advance to the metallic roller to thereby suppress collision or shock when the roller chain meshes with a sprocket.

Another conventional roller chain disclosed in Japanese Patent Laid-open Publication No. HEI-7-71539 has a cushion member attached to an inner link plate for abutment with the outer circumferential surface of a boss of a sprocket. When the roller chain meshes with the sprocket, the engagement starts with contact between the cushion member and the outer circumferential surface of the boss to suppress collision or shock. The cushion member also serves to suppress vibration of the chain, which may occur after meshing of the chain with the sprocket. This provides an additional noise prevention effect. Other conventional roller chains equipped with a noise suppressing means are disclosed in Japanese Utility Model Publications Nos. HEI-5-586, HEI-3-26344, HEI-2-15067 and HEI-1-40363.

The conventional measures incorporated in the roller chains against noises generated when the roller chains engage a sprocket are, however, not fully satisfactory. For example, the annular cushion member (elastic roller) fitted on the same bushing together with the metallic roller has a noise suppressing effect which is greatly influenced by the material, the outside diameter as compared to that of the metallic roller (i.e., the amount of elastic deformation) and width of the elastic roller. Additionally, since the roller chain is used under severe operating conditions involving meshing engagement with the sprocket at high speeds with collision accompanied therewith, a sufficient care should be taken not only to suppress noises but also to maintain the durability of the roller chain.

It is accordingly an object of the present invention to provide a low noise chain, which is capable of reducing noise generated upon abutment of the roller chain with a sprocket, without deteriorating the durability of the roller chain to an objectionable extent.

To achieve the foregoing object, according to the present invention, there is provided a low noise roller chain comprising inner and outer links alternately arranged and articulately connected together in a longitudinal direction of the roller chain. The inner links each have a bushing and a pair of inner plates connected to opposite ends of the bushing, respectively. The outer links each have a pin and a pair of outer plates connected to opposite ends of the pin, respectively, the pin extending through the bushing. A rigid roller made of metal and an elastic roller made of elastic material are arranged end-to-end and fitted on the bushing so as to jointly form a roller assembly. The elastic roller has a width along the axis of the roller assembly, which is 13 to 45% of the overall width of the roller assembly along the axis thereof. The elastic roller also has a thickness, which is larger than the thickness of the rigid roller by 5 to 25% of the thickness of the elastic roller.

By thus setting the width and outside diameter of the elastic roller, it is possible to suppress noise generated upon abutment of the roller chain with a sprocket without deteriorating the durability of the rigid metal roller.

In one preferred form of the invention, the elastic roller is arranged in a zigzag pattern in a longitudinal direction of the roller chain. The roller chain may comprise two or more longitudinal chain portions of uniform lengths, in which instance the zigzag pattern of the elastic rollers in one of the longitudinal chain portions is preferably opposite in phase to the zigzag pattern of the elastic rollers in the adjacent chain portion. The zigzag arrangement of the elastic rollers enables uniform engagement between the roller assemblies and teeth of the sprocket, leading to a noise suppressing effect uniformly distributed over the entire length of the roller chain

The above and other objects, features and advantages of the present invention will become manifest to those versed in the art upon making reference to the following description and accompanying sheets of drawings in which a certain preferred structural embodiment incorporating the principle of the invention is shown by way of illustrative example.
FIG. 1 is a plan view of a low noise roller chain according to an embodiment of the present invention;
FIG. 2 is a cross-sectional view taken along line II-II of FIG. 1;
FIG. 3 is a graph showing the relation between the noise suppressing effect and the proportion the width of elastic rollers to the overall width of roller assemblies of the roller chain;
FIG. 4 is a graph showing the relation between the noise suppressing effect and the amount of elastic deformation of the elastic rollers of the roller chain;
FIG. 5 is a graph showing the relation between the durability index and the proportion of width of the elastic rollers of the roller chain; and
FIG. 6 is a graph showing the relation between the durability index and the amount of elastic deformation of the elastic rollers of the roller chain.

The following description is merely exemplary in nature and is in no way intended to limit the invention or its application or use.

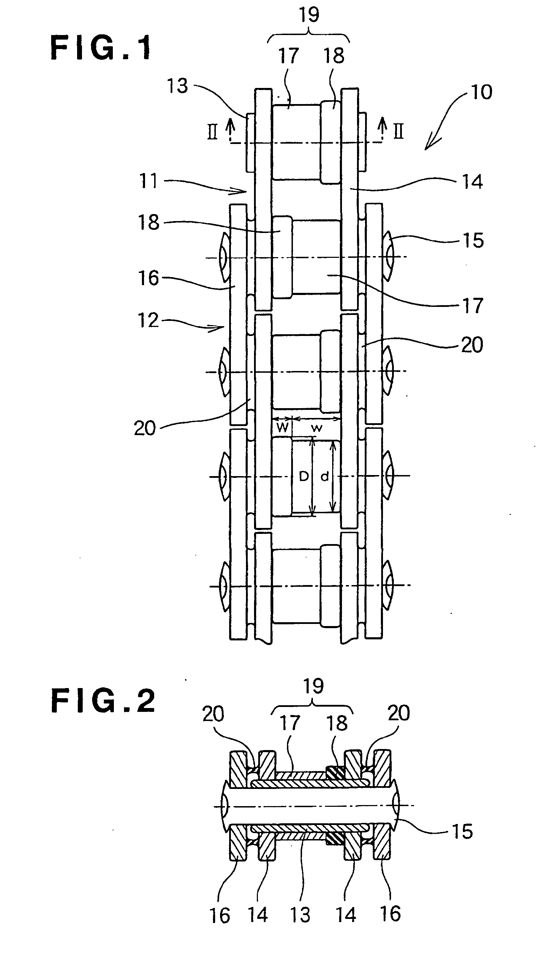

Referring to the drawings and FIGS. 1 and 2 in particular, there is shown a low noise roller chain according to an embodiment of the present invention. The roller chain 10 generally comprises inner links (roller links) 11 and outer links (pin links) 12 alternately arranged and articulately connected together in a longitudinal direction of the roller chain 10.

The inner links 11 each include a hollow cylindrical bushing 13 and a pair of opposed inner plates 14 connected to opposite ends of the bushing 13, respectively. The outer links 12 each include a pin 15 and a pair of opposed outer plates 16 connected to opposite ends of the pin 15, respectively. The pin extends through the bushing 13.

The roller chain 10 further has a rigid roller 17 made of metal and an elastic roller 18 made of an elastic material that are slidably fitted in pair on each bushing 13. The rigid and elastic rollers 17 and 18 are disposed end to end and jointly form a roller assembly 19. The elastic roller 18 has an outside diameter D which is larger than an outside diameter d of the rigid roller 17 to a certain extent, as will be described later. The rigid roller 17 has a width w along the axis of the roller assembly 19, and the elastic roller 18 has a width W along the axis of the roller assembly 19. The percentage of the width W to an overall width (W+w) of the roller assembly 19 is set to fall in a certain range, as will be described later. The eligible for the elastic roller 18 include natural rubbers, and synthetic rubbers such as polyurethane, or synthetic resin elastomers. In the illustrated embodiment, the elastic rollers 18 are arranged in a zigzag pattern in the longitudinal direction of the roller chain 10. This arrangement enables uniform engagement between the roller assemblies 19 and teeth of a sprocket (not shown), leading to a noise suppressing effect uniformly distributed over the entire length of the roller chain 10.

It will be appreciated that the length of the roller chain 10 comprises more than two longitudinal portions of uniform lengths, and the zigzag pattern of the elastic rollers 18 in one longitudinal chain portion is opposite in phase to the zigzag pattern of the elastic rollers 18 in the adjacent longitudinal chain portion.

As better shown in FIG. 2, a seal ring such as an O-ring 20 is disposed between an outer surface of each inner plate 14 and an inner surface of a corresponding one of the outer plates 16, so that a lubricating oil filled in a clearance between the pin 15 and the bushing 13 is sealed by the O-rings 20 against leakage.

When the low noise roller chain 10 is used in a motorcycle, the size of the roller chain 10 may be #40, #50 or #60. In applications for other industrial purposes, the size of the roller chain 10 may further include #80.

### Noise Test

Test Conditions
Test Equipment: sound level meter
Chain size: #50
Number of links: 100
Number of driving sprocket teeth: 15
Number of driven sprocket teeth: 45
Chain tension: 1.5 kN
Driving sprocket speed: 1,000 rpm
Hardness of elastic roller: 98°
Amount of elastic deformation of elastic roller: 20% of the thickness of elastic roller

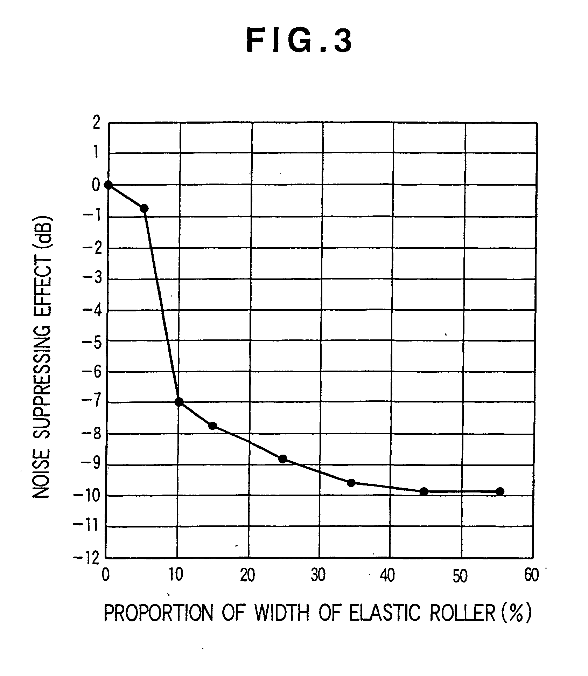

Under the conditions given above, a noise test was made to determine the relationship between the width of the elastic roller 18 and the noise suppressing effect attained by the elastic roller 18. In the test, the amount of elastic deformation of the elastic roller 18 occurring when the roller chain engages the sprockets was kept constant. The amount of elastic deformation of the elastic roller 18 is therefore equal to the difference between the thickness of the elastic roller 18 and the thickness of the rigid metal roller 17 and can be expressed as a proportion or percentage to the thickness of the elastic roller 18. The result of the test is shown in FIG. 3, wherein the vertical axis represents the noise suppressing effect (dB) and the horizontal axis represents the proportion (%) of the width of the elastic roller 18 to the overall width of the roller assembly 10.

It appears clear from FIG. 3 that no noise suppressing effect can be attained when the proportion in width of the elastic roller 18 to the roller assembly 19 is 0 (zero), i.e., when the roller chain does not have elastic rollers. As shown in FIG. 3, a certain degree of noise suppressing effect can be attained by increasing the proportion of the width of the elastic roller 18 to the width of the roller assembly 19. Especially, with an increase in the proportion of the width of the elastic roller 18 from the 5 to 10%, the sound level sharply drops to about -7 dB. When the proportion of the width of the elastic roller exceeds 10%, the noise suppressing effects increases gently. For a proportion of the width of the elastic roller 18, which is greater than 40% of the overall width of the roller assembly 19, no noise suppressing effect can be attained.

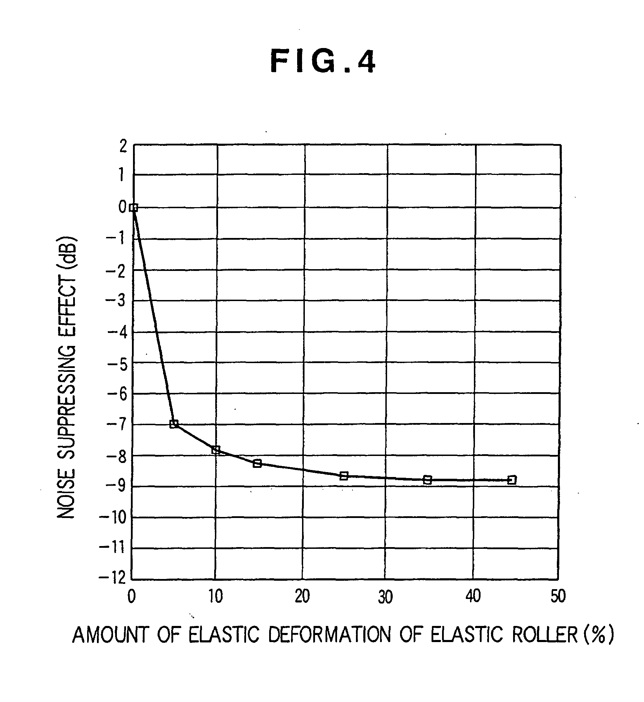

Under the same conditions as described above except for the proportion of the width of the elastic roller 18 kept uniformly at 20% in place of setting the amount of elastic deformation of the elastic roller 18, a similar test was made to determine the relationship between the amount of elastic deformation of the elastic roller 18 and the noise suppressing effect attained by the elastic roller 18. The result of the noise test is shown in FIG. 4, in which the vertical axis represents the noise suppressing effect (dB) and the horizontal axis represents the amount of elastic deformation (%) of the elastic roller 18 occurring when the roller chain engages the sprockets.

As shown in FIG. 4, no noise suppressing effect can be attained when the amount of elastic deformation of the elastic roller 18 is 0 (zero), i.e., when the elastic roller 18 has the same outside diameter as the rigid roller 17. As the amount of elastic deformation of the elastic roller increases from 0 to 5% of the thickness of the elastic roller 18, the sound level sharply drops to about -7 dB. A further increase in the amount of elastic deformation of the elastic roller from 5 to 20% provides a gently increasing noise suppressing effect. For an elastic deformation of the elastic roller 18, which is greater than 20%, noise-suppressing effect cannot be attained any more.

### Durability Test

### Test Conditions

Test Equipment: endurance test machine
Chain size: #50
Number of links: 100
Number of driving sprocket teeth: 15
Number of driven sprocket teeth: 45
Hardness of elastic roller: 98°
Amount of elastic deformation of elastic roller: 20% of the thickness of elastic roller
Others: actual driving conditions

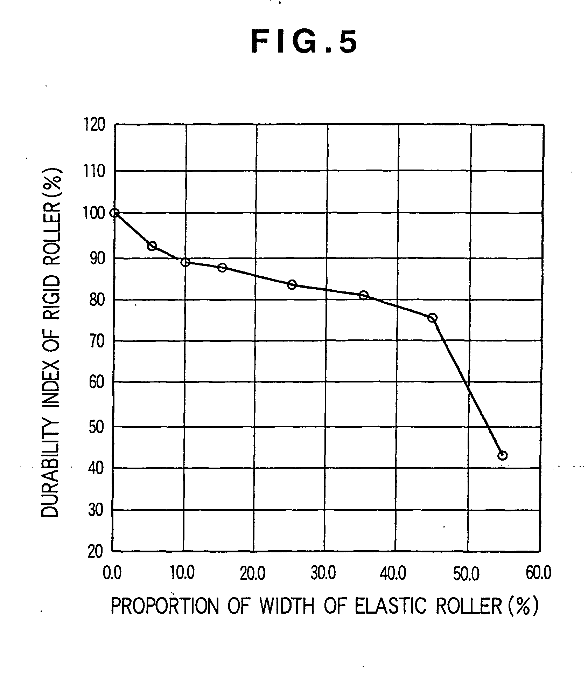

Under the conditions given above, an endurance or durability test was made to determine the relationship between the width of the elastic roller 18 and the durability index of the rigid metal roller 18. The result of the test is shown in FIG. 5, wherein the vertical axis represents the durability index (%) of the rigid roller 17 and the horizontal axis represents the proportion (%) of the width of the elastic roller 18 to the overall width of the roller assembly 10.

As shown in FIG. 5, when the proportion of the width of the elastic roller 18 to the overall width of the roller assembly 19 is 0 (zero), the durability index is 100%. This means that only the rigid metal roller 17 constructs the roller assembly 19. The 100% durability index is used as a reference value representing when a rupture or break occurs in the rigid metal roller 17. The durability index gradually decreases in an acceptable extent with an increase in the proportion of the width of the elastic roller 18. When the proportion of the elastic roller width exceeds 45%, the durability index drops abruptly.

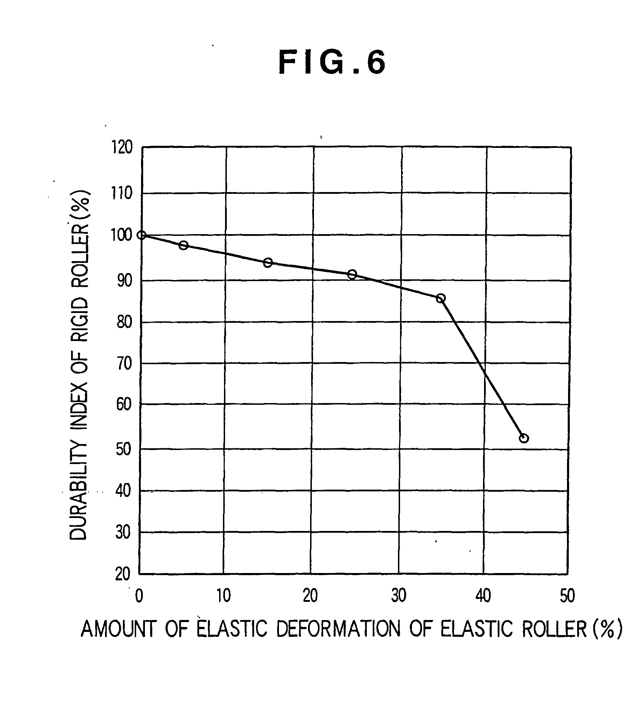

Under the same conditions as described above except for the proportion of the width of the elastic roller 18 kept uniformly at 20% in place of setting the amount of elastic deformation of the elastic roller 18, a similar test was made to determine the relationship between the amount of elastic deformation of the elastic roller 18 and the durability index of the rigid metal roller 17. The result of the test is shown in FIG. 6, in which the vertical axis represents the durability index (%) of the rigid metal roller 17 and the horizontal axis represents the amount of elastic deformation (%) of the elastic roller 18 occurring when the roller chain engages the sprockets.

As shown in FIG. 6, when the amount of elastic deformation of the elastic roller 18 is 0 (zero), the durability index is 100%. This means that the elastic roller 18 has the same outside diameter as the rigid metal roller 17 and a rupture or break occurs in such rigid metal roller 17 at a durability index of 100%. The durability index gradually decreases with an increase in the amount of elastic deformation the elastic roller 18. The degree of deterioration of the durability index is still within an acceptable range. When the amount of elastic roller deformation exceeds 35% of the thickness of the elastic roller, the durability index drops abruptly.

It is apparent from the test results described above with reference to FIGS. 3-6 that the width of the elastic roller 18 is preferably in the range of 13 to 45% of the overall width of the roller assembly 19, and the amount of elastic deformation of the elastic roller (i.e., the difference between the thickness of the elastic roller 18 and the thickness of the rigid metal roller 17) is preferably in the range of 5 to 25% of the thickness of the elastic roller 18, so that a sufficient noise suppressing effect can be attained without causing an objectionable reduction of the durability of the rigid metal roller 17.

By thus setting the proportion in width of the elastic roller 18 to the roller assembly 19 and the amount of elastic deformation of the elastic roller 18, a collision sound generated upon abutment of the roller chain 10 with a sprocket can be effectively suppressed by the elastic roller 18. The elastic roller 18 can also suppress vibration, which may occur after the roller assembly 19 comes into meshing engagement with a sprocket tooth. The elastic roller 18 used in combination with the rigid metal roller 17 does not deteriorate the durability of the rigid metal roller 17.

Through not described, it has been experimentally proved that substantially the same effect can be attained also in the case of roller chains having a size of #40, #60 or #80 same.

A low noise roller chain (1) includes a rigid roller (17) made of metal and an elastic roller (18) made of elastic material that are arranged end to end and fitted on a bushing (13) between two opposed inner plates (14) so as to jointly form a roller assembly (19). The width (W) of the elastic roller is 13 to 45% of the overall width (W+w) of the roller assembly (19), and the thickness of the elastic roller (18) is larger [by 5 to 25%] than the thickness of the rigid roller (17) by 5 to 25% of the thickness of the elastic roller (18). With the elastic roller (18) thus constructed, noise generated upon abutment of the roller chain with a sprocket can be effectively suppressed without deteriorating the durability of the rigid metal roller (17). The elastic roller may be arranged in a zigzag pattern in the longitudinal direction of the roller chain.

## Claims

1. A low noise roller chain comprising:
inner (11) and outer links (12) alternately arranged and articulately connected together in a longitudinal direction of the roller chain (10),
the inner links (11) each having a bushing (13) and a pair of inner plates (14) connected to opposite ends of the bushing (13), respectively,
the outer links (12) each having a pin (15) and a pair of outer plates (16) connected to opposite ends of the pin (15), respectively, the pin (15) extending through the bushing (13); and
a rigid roller (17) made of metal and an elastic roller (18) made of elastic material that are arranged end to end and fitted on the bushing (13) so as to jointly form a roller assembly (19),
the elastic roller (18) having a width (W) along the axis of the roller assembly (19), which is 13 to 45% of the overall width of the roller assembly (19) along the axis thereof, and
the elastic roller (18) having a thickness, which is larger than the thickness of the rigid roller (17) by 5 to 25% of the thickness of the elastic roller (18).

2. A low noise roller chain according to claim 1, wherein the elastic roller (18) is arranged in a zigzag pattern in a longitudinal direction of the roller chain (10).

3. A low noise roller chain according to claim 2, wherein the roller chain (10) comprises two or more longitudinal chain portions of uniform lengths, the zigzag pattern of the elastic rollers in one of the longitudinal chain portions being opposite in phase to the zigzag pattern of the elastic rollers in the adjacent chain portion.
